# EUROPÄISCHE PATENTSCHRIFT

(11) **EP 4 484 701 B1**
(45) Veröffentlichungstag und Bekanntmachung des Hinweises auf die Patenterteilung: **21.10.2026**
(21) Anmeldenummer: 24181315.3
(22) Anmeldetag: 11.06.2024
(51) Int. Cl.: F01C 21/10, F04C 2/107, F04C 2/12

(54) **STATOR FÜR EINE PUMPE SOWIE VERFAHREN ZUM HERSTELLEN EINES STATORS FÜR EINE PUMPE**
STATOR FOR A PUMP AND METHOD FOR PRODUCING A STATOR FOR A PUMP
STATOR POUR UNE POMPE AINSI QUE PROCÉDÉ DE FABRICATION D'UN STATOR POUR UNE POMPE

(30) Priorität: 27.06.2023 DE 102023116836
(43) Veröffentlichungstag der Anmeldung: 01.01.2025
(73) Patentinhaber: NETZSCH Pumpen & Systeme GmbH, 95100 Selb (DE)
(72) Erfinder: Tekneyan, Mikael, 84559 Kraiburg am Inn (DE); Lachenwitzer, Franz, 84478 Waldkraiburg (DE); Benedet-Eulenberger, Priscilla, 85622 Feldkirchen (DE); Kamal, Hisham, 84478 Waldkraiburg (DE)
(74) Vertreter: Isarpatent

(56) Entgegenhaltungen:
- DE-A1- 102015 220 321
- US-A1- 2013 149 182
- US-A1- 2017 182 561
- US-A1- 2017 298 933

## Beschreibung

Die Erfindung betrifft einen Stator für eine Pumpe, insbesondere für Drehkolbenpumpe oder eine Exzenterschneckenpumpe, mit einem Grundkörper, wobei der Grundkörper einen Pumpenraum für eine Rotoranordnung der Pumpe umgibt, einen Tragkörper und einen Laufkörper aufweist und der Laufkörper eine Lauffläche zum zumindest teilweisen Kontaktieren mit der Rotoranordnung der Pumpe ausbildet. Weiterhin betrifft die Erfindung ein Verfahren zum Herstellen eines Stators für eine Pumpe sowie einen mittels eines solchen Verfahrens hergestellten Stators für eine Pumpe.

Bekannte Statoren für beispielsweise Exzenterschneckenpumpen sind teilweise mit Elastomeren, beispielsweise mit einer aus einem Elastomer ausgebildeten Beschichtung, ausgestattet, um gute elastische Eigenschaften im Betrieb der Pumpe gegenüber einem im Stator laufenden Rotor zu gewährleisten. Alternativ dazu sind Statoren bekannt, welche als Feststoff-Statoren beispielsweise aus Metall ausgeführt sind, welche zwar im Betrieb gute Verschleißeigenschaften zeigen, allerdings einen hohen Anspruch an die Fertigungspräzision erfordern, vergleichbar geringe Pumpleistung zeigen oder beispielsweise nicht vollständig dichten.

Bezüglich eines Querschnittes und/oder einer Längenausdehnung des elastischen Materials eines solchen Stators ist eine entsprechende Steifigkeit, Elastizität und/oder Härte innerhalb des Stators jeweils identisch und beispielsweise nur von einer Dicke und/oder von spezifischen Eigenschaften eines gewählten Elastomers abhängig.

Die US 2017 298 933 A1 offenbart einen Stator für eine Pumpe, wobei der Stator mit einer Rippenstruktur in seinem Verformungsverhalten angepasst werden kann.

Die US 2013 149 182 A1 beschreibt einen Stator für eine Pumpe, wobei der Stator mit einer Verstärkung versehen ist. Dabei dient die Verstärkung zwischen einer inneren Schicht und einer äußeren Schicht zum Anpassen eines Verformungsverhaltens des Stators.

Die DE 102015 220 321 A1 offenbart ein Pumpengehäuse mit einer Bewehrung. Die Bewehrung verstärkt das Pumpengehäuse, wobei jeweilige Kontaktflächen zu beweglichen Bauteilen der Pumpe frei von Bewehrung gehalten werden.

Die US 2017 182 561 A1 beschreibt eine hochstabile Komponente für einen Kompressor aus einem Feststoff, wobei eine innere Gitterstruktur der Verstärkung dient. Die Komponente ist mittels eines additiven Fertigungsverfahrens hergestellt.

Aufgabe der Erfindung ist es, den Stand der Technik zu verbessern.

Gelöst wird die Aufgabe durch einen Stator für eine Pumpe, insbesondere für eine Drehkolbenpumpe oder eine Exzenterschneckenpumpe, mit einem Grundkörper, wobei der Grundkörper einen Pumpenraum für eine Rotoranordnung der Pumpe umgibt, einen Tragkörper und einen Laufkörper aufweist und der Laufkörper eine Lauffläche zum zumindest teilweisen Kontaktieren mit der Rotoranordnung der Pumpe ausbildet, wobei der Tragkörper und der Laufkörper einen gemeinsamen Werkstoff aufweisen und eine Werkstoffdichte des Werkstoffes des Tragkörpers und eine Werkstoffdichte des Werkstoffes des Laufkörpers voneinander unterschiedlich eingestellt sind, sodass mittels der unterschiedlich eingestellten Werkstoffdichten eine unterschiedliche Elastizität und/oder eine unterschiedliche Härte des Werkstoffes im Tragkörper und im Laufkörper erreicht ist.

Mit dieser Ausführung eines Stators kann der gemeinsame Werkstoff für den ganzen Stator oder für große Teile des Stators genutzt werden und dennoch eine strukturelle Unterscheidung zwischen Laufkörper und Tragkörper derart erreicht werden, dass der Laufkörper und der Tragkörper jeweils andere Eigenschaften aufweisen, welche im Betrieb der Pumpe relevant sind.

Auf diese Weise können beispielsweise dem Laufkörper Eigenschaften aufgeprägt werden, welche in Richtung einer besonderen Verschließfestigkeit zielen, während beispielsweise dem Tragkörper Eigenschaften aufgeprägt werden können, welche eine hohe Elastizität und Resilienz gegenüber mechanischen Belastungen herbeiführen.

Folgende Begriffe seien in diesem Zusammenhang erläutert:
Eine "Pumpe" ist eine technische Einrichtung, welche mittels einer Bewegung, insbesondere mittels einer relativen Bewegung von mechanischen Komponenten zueinander ein Fluid fördert. Insbesondere ist eine solche Pumpe im Zusammenhang mit der vorliegenden Erfindung eine sogenannte Verdrängerpumpe. Eine solche Verdrängerpumpe fördert das Fluid insbesondere mittels eines lokalen Verdrängens des Fluides und ist beispielsweise als Drehkolbenpumpe oder als Exzenterschneckenpumpe ausgeführt.

Ein "Stator" bezeichnet einen feststehenden Teil einer Pumpe, gegenüber dem beispielsweise ein Rotor beweglich angeordnet ist. Ein solcher Stator ist darauf ausgelegt, entweder passgenau mit dem Rotor der Pumpe, beispielsweise in einer Drehkolbenpumpe, zu wirken oder ein elastisches Anlegen des Stators an einen Rotor oder eine Rotoranordnung einer Pumpe während der Drehbewegung oder exzentrischen Drehbewegung des Rotors zu gewährleisten, beispielsweise in einer Exzenterschneckenpumpe. Zusammen dienen Stator und Rotor der Funktion der "Pumpe", also einer technischen Einrichtung zum Bewegen von Fluiden, beispielsweise zum Pumpen von Flüssigkeiten, indem ein Volumen innerhalb der Pumpe mittels des Zusammenwirkens von Stator und Rotor dynamisch bewegt wird.

Ein "Grundkörper" bezeichnet dabei eine mechanische Gesamtheit des Stators, welche dessen strukturelle Integrität und auch entsprechende Funktionsflächen bereitstellt. Ein solcher Grundkörper des Stators umgibt dabei beispielsweise einen "Pumpenraum" vollständig oder auch teilweise, sofern der Stator in einer Pumpe angeordnet ist. Der Pumpenraum dient der Aufnahme einer Rotoranordnung, also beispielsweise eines Rotors oder mehrerer Rotoren, wobei ein Rotor in diesem Zusammenhang auch eine Exzenterschneckenwelle einer Exzenterschneckenpumpe sein kann. Ebenso kann der Rotor oder eine entsprechende Rotoranordnung auch Zahnräder in einer Zahnradpumpe, Drehkolben in einer Drehkolbenpumpe oder vergleichbare technische Einrichtungen in einer entsprechend konstruierten Pumpe beschreiben. Kerngedanke der Erfindung ist in diesem Zusammenhang, zumindest einen der beiden Bestandteile, nämlich den Stator und/oder einen oder mehrere entsprechende Rotoren, aus einem gemeinsamen Werkstoff und mit unterschiedlichen Werkstoffdichten auszustatten, um unterschiedliche technische Eigenschaften zu erzeugen. Dies wird beispielsweise durch entsprechende Fertigungsverfahren erreicht.

Ein "Tragkörper" bezeichnet in diesem Zusammenhang beispielsweise eine Tragstruktur oder einen Abschnitt des Grundkörpers, welcher im Wesentlichen dem mechanischen Tragen von Kräften und beispielsweise dem Aufnehmen von Verformungen dient, wohingegen ein "Laufkörper" insbesondere dazu ausgerichtet ist, gegenüber der Rotoranordnung zu wirken und eine "Lauffläche" gegenüber dem Rotor bereitzustellen. Dazu ist insbesondere relevant, dass der Laufkörper und die bereitgestellte Lauffläche beispielsweise eine höhere Härte aufweist oder aufweisen als der Tragkörper oder beispielsweise bessere Verschleißeigenschaften oder auch verbesserte oder angepasste Gleiteigenschaften gegenüber dem Rotor vorweisen.

Ein "gemeinsamer Werkstoff" bezeichnet in diesem Zusammenhang insbesondere einen gemeinsamen Grundwerkstoff oder einen gemeinsamen Ausgangswerkstoff, aus dem sowohl der Tragkörper als auch der Laufkörper des Stators gebildet sind. Beispielsweise kann als gemeinsamer Werkstoff ein Elastomer einer bestimmten Gruppe oder Art gewählt werden, ebenso wie ein bestimmtes Metall, beispielsweise Edelstahl. Als Elastomer kann dazu beispielsweise auch ein TPE, also ein thermoplastisches Elastomer, verwendet werden. Ein solches TPE weist elastische Eigenschaften eines Elastomers auf und ist dennoch, im Gegensatz zu einem klassischen, beispielsweise vulkanisierten Elastomer, durch Wärmeeinwirkung zumindest teilweise erweichbar oder aufschmelzbar. Solche TPEs sind dabei häufig auch recyclebar und damit nachhaltig. Es sei darauf hingewiesen, dass der den Tragkörper und/oder der Laufkörper aus einem gemeinsamen Ausgangswerkstoff gebildet sind und auch nach dem Fertigungsprozess die gleichen oder vergleichbare chemischen Eigenschaften aufweisen, jedoch in ihrer makroskopischen oder mikroskopischen Werkstoffdichte unterschiedlich ausgebildet sind. Diese unterschiedliche Werkstoffdichte stellt dabei keine Unterscheidung abweichend von einem "gemeinsamem Werkstoff" dar.

Eine "Werkstoffdichte" des jeweiligen Teilkörpers des Grundkörpers beschreibt in diesem Zusammenhang die Anordnung entsprechender Werkstoffteile zum Erzielen unterschiedlicher spezifischer Gewichte und/oder unterschiedlicher prozentualer Werkstoffanteile in einem Vergleichsvolumen, sodass die Werkstoffdichte sowohl eine gravimetrische Dichte, beispielsweise in g/cm³, als auch eine Strukturdichte, beispielsweise in Vol.-%, bezeichnen kann. Diese Strukturdichte kann dabei beispielsweise auch durch eine ungleichmäßige Verteilung von Werkstoff und Fehlstellen innerhalb eines definierten Volumens erreicht werden.

"Unterschiedlich eingestellt" beschreibt in diesem Zusammenhang, dass eine Werkstoffdichte des Werkstoffs des Tragkörpers beispielsweise geringer oder auch höher gewählt ist als eine Werkstoffdichte des Werkstoffs des Laufkörpers, also beispielsweise der Laufkörper weniger porös ist als der Tragkörper und/oder ein höheres spezifisches Gewicht aufweist.

Eine "Elastizität" bezeichnet die Eigenschaft des so erzeugten Werkstoffes, elastische Verformung aufzunehmen, beispielsweise eine hohe Bruchdehnung bereitzustellen und/oder ein hohes Energieaufnahmevermögen, ohne den Werkstoff nachhaltig zu schädigen. Eine "Härte" bezeichnet in diesem Zusammenhang die Widerstandsfähigkeit des Werkstoffes gegenüber lokaler Verformung, beispielsweise gegen ein Drücken und/oder gegen mechanischen Verschleiß durch Abtrag der Oberfläche. Ein "harter" Werkstoff ist hierbei beispielsweise verschleißfester als ein "weicher" Werkstoff. Für Elastomere kommt hier als weiterer oder alternativer Bewertungsmaßstab insbesondere auch die Rückprallelastizität in Betracht, welche die Fähigkeit des Werkstoffes beschreibt, eine aufgeprägte Verformung nach einer Belastung zu verlassen und in eine ursprüngliche Form zurückzukehren. Insbesondere bei einer Bewegung des Rotors im Stator ist diese Eigenschaft von Bedeutung, da ein schnelles und möglichst vollständiges Rückfedern des Stators zum Aufrechterhalten einer Dichtigkeit relevant ist.

Um den Laufkörper gegenüber dem Rotor besonders verschleißfest auszulegen, ist die Werkstoffdichte des Laufkörpers höher als die Werkstoffdichte des Tragkörpers, sodass der Laufkörper insbesondere eine geringere Elastizität und/oder eine höhere Härte und/oder eine angepasste Rückprallelastizität aufweist als der Tragkörper.

In einer Ausführungsform weist der Tragkörper einen ersten Tragkörperteil, einen zweiten Tragkörperteil, einen dritten Tragkörperteil und/oder einen weiteren Tragkörperteil auf, wobei die Werkstoffdichten des Werkstoff des jeweiligen Tragkörperteils voneinander unterschiedlich eingestellt sind, sodass mittels der unterschiedlich eingestellten Werkstoffdichten beispielsweise eine unterschiedliche Elastizität und/oder eine unterschiedliche Härte des Werkstoffes im jeweiligen Tragkörperteil gegenüber dem jeweiligen anderen Tragkörperteil erreicht ist, wobei insbesondere die jeweiligen Tragkörperteile in im Wesentlichen radial um den Pumpenraum angeordneten Schichten angeordnet sind.

Durch diese Ausführung kann beispielsweise der Tragkörper graduell mechanisch verändert werden, wobei hier eine Abgrenzung zwischen jeweiligen Tragkörperteilen auch fließend erfolgen kann, sodass beispielsweise ein Elastizitätsspektrum und/oder ein Härtespektrum insbesondere radial zum Pumpenkörper erreichbar ist. Ebenso können entsprechende Tragkörperteile jedoch auch in Schichten, Abschnitten oder Bereichen des Tragkörpers gewählt sein. Solche "Tragkörperteile" sind dabei unterschiedliche Abschnitte, Bereiche oder auch Teilbereiche des Tragkörpers, welche geometrisch verortbar sind.

Es sei hierzu erwähnt, dass eine angepasste Werkstoffdichte auch graduell oder stufenweise entlang einer Längsachse des Rotors einer Exzenterschneckenpumpe gewählt werden kann, um dem steigenden Innendruck im Pumpenraum zu begegnen, der auf Grund des Konstruktionsprinzips der Exzenterschneckenpumpe auftritt. Beispielsweise ist dazu die Härte des Stators an einer Eingangsseite der Exzenterschneckenpumpe, an der ein geringer Druck anliegt, niedrig gewählt ist und in Richtung einer Ausgangsseite der Exzenterschneckenpumpe erhöht ist, um dem entlang der Förderrichtung sukzessive ansteigenden Druck zu begegnen und eine Abdichtung zwischen Stator und Rotor weiterhin sicherzustellen.

Die Bezeichnung "radial um den Pumpenraum" beschreibt in diesem Zusammenhang eine Anordnung beispielsweise um eine Welle eines Rotors, also eine entsprechende Drehachse. Es sei in diesem Zusammenhang darauf hingewiesen, dass "radial" keinesfalls mathematisch exakt ausgelegt werden kann, sondern beispielsweise technische Abweichungen, welche beispielsweise durch die Geometrie des Rotors oder andere Randbedingungen festgelegt sind, inbegriffen sind. So können lokal "radiale" Anordnungen um einen Pumpenraum im Falle einer Drehkolbenpumpe auch entsprechenden Teilbereiche einer Pumpe in Bezug zu einem jeweiligen Drehkolben bezeichnen.

Beispielsweise weist oder weisen der Tragkörper und/oder insbesondere der jeweilige Tragkörperteil eine innere Struktur auf, wobei die innere Struktur Poren, Hohlräume und/oder Kammern, sowie Stege, Lamellen und/oder Werkstoffbrücken aufweist, wobei insbesondere mittels der durch die Verteilung der Poren, Hohlräume und/oder Kammern sowie Stege, Lamellen und/oder Werkstoffbrücken eingestellten makroskopischen Werkstoffdichten eine unterschiedliche Elastizität, eine angepasste Federwirkung und/oder eine unterschiedliche Härte oder auch unterschiedliche Rückprallelastizität des Werkstoffes im Tragkörper und im Laufkörper erreicht ist.

Eine solche "innere Struktur" bezeichnet dabei beispielsweise eine geometrisch bestimmte oder auch eine geometrisch unbestimmte Anordnung von bewusst eingebrachten Fehlstellen innerhalb des Werkstoffes, wobei hierbei im Wesentlichen runde Fehlstellen, wie Poren, geometrisch größere "Hohlräume" oder sogar "Kammern", also bewusste geometrisch bestimmte Fehlstellen, eingebracht sein können. Entsprechende Werkstoffbereiche, namentlich Stege, Lamellen und/oder Werkstoffbrücken bestimmen dabei in ihrer Ausprägung entsprechende mechanische Eigenschaften. Eine "makroskopische Werkstoffdichte" bezeichnet in diesem Zusammenhang beispielsweise eine über den gesamten Tragkörper und/oder über den gesamten Tragkörperteil betrachtete Werkstoffdichte, wobei lokale Werkstoffdichten hierbei naturgemäß abweichen, beispielsweise durch hohe Werkstoffdichten innerhalb der Stege und geringe Werkstoffdichten innerhalb von Hohlräumen, welche bis auf 0 absinken können.

Somit kann der Stator beispielsweise lokal mit Federelementen oder elastischen Stützelementen versehen werden.

Insbesondere kann dabei die innere Struktur mittels einer Druckfluidzuführung oder mehrerer Druckfluidzuführungen fluidleitend zugänglich ausgebildet sein, wobei mittels eines Einleitens eines Druckfluides durch die Druckfluidzuführung oder durch die Druckfluidzuführungen in die Poren, Hohlräume und/oder Kammern der inneren Struktur eine druckinduzierte Kraft auf den Laufkörper erhöht und/oder mittels eines Ableitens eines Druckfluides durch die Druckfluidzuführung oder durch die Druckfluidzuführungen aus den Poren, Hohlräumen und/oder Kammern der inneren Struktur abgesenkt ist.

Beispielsweise kann so die Härte und/oder die Flexibilität des Stators, auch punktuell oder abschnittsweise, mittels eines Anpassens eines Drucks und/oder eines Volumens des Druckfluides in der inneren Struktur bedarfsgerecht angepasst werden. Insbesondere kann damit ein Anpassen der Eigenschaften des Stators auch entlang der Förderrichtung Druckangepasst erfolgen, sodass bei einem ansteigenden Druck in der Pumpe entlang einer Förderrichtung auch eine angepasste Gegenkraft des Stators auf den Rotor eingestellt werden kann.

Eine "Druckfluidzuführung" ist in diesem Zusammenhang beispielsweise ein Ventil, ein Druckanschluss oder eine Öffnung, insbesondere mit einem Rückschlagventil oder mit einem steuerbaren Ventil, welches oder welche ein Zuführen eines als "Druckfluid" bezeichneten Fluides, also beispielsweise eines Gases oder eine Flüssigkeit, ermöglicht. So kann mittels eines entsprechend eingestellten Drucks in der inneren Struktur ein entsprechendes Verhalten des Stators herbeigeführt werden.

Hierzu erfolgt ein "Einleiten", also das Zuführen von Druckfluid zum Erhöhen oder Aufrechterhalten des Drucks, oder ein "Ableiten", also das Abführen von Druckfluid zum Verringern oder Aufrechterhalten des Drucks, jeweils abhängig von beispielsweise einer vom Rotor punktuell aufgebrachten Verformung des Stators.

Insbesondere ist dabei der Druckfluidzuführung oder den Druckfluidzuführungen eine Steuereinrichtung zum Steuern des Einleitens und/oder Ableitens des Druckfluides durch die Druckfluidzuführung zugeordnet.

Somit kann, beispielsweise auch Abschnittsweise entlang der Förderrichtung, ein Druck und des Druckfluides und damit ein entsprechendes mechanisches Verhalten des Stators eingestellt werden.

Eine "Steuereinrichtung" ist dabei beispielsweise eine elektronische Steuerung mit einem damit angesteuerten Ventilblock, um beispielsweise abhängig von einem Drucksensor den Druck zu steuern oder auch zu regeln.

In einer Ausführungsform ist der Tragkörper und/oder insbesondere der jeweilige Tragkörperteil und/oder der Laufkörper mittels eines werkstoffbildenden Urformverfahrens, insbesondere mittels eines additiven Verfahrens und/oder mittels eines Sinterverfahrens, hergestellt.

Insbesondere werkstoffbildende Urformverfahren können hierbei direkt mit der Herstellung des Stators eine entsprechende Verteilung von Werkstoffdichten erzeugen, indem beispielsweise im Falle eines additiven Verfahrens eine lokale Herstellungsdichte des Werkstoffes und/oder mittels eines Sinterverfahrens durch unterschiedlich granulare Ausgangswerkstoffe der Grundkörper erzeugt wird.

Ein "werkstoffbildendes Urformverfahren" bezeichnet hierbei ein Verfahren, bei dem aus einem Grundwerkstoff, einer Grundmasse oder beispielsweise einem Pulver oder einem Granulat durch insbesondere physikalisches Einwirken der Werkstoff mit dem Werkstück gemeinsam geformt wird. Beispielsweise kann hier, aus den oben genannten Gründen, ein TPE-Granulat verwendet werden. Ein "additives Verfahren" ist hierbei beispielsweise als "3D-Druck" bekannt, also beispielsweise als thermoplastisches Auftragsverfahren, als Laser-Sinter-Verfahren oder vergleichbar. Ein "Sinterverfahren" bezeichnet ein unter Druck und hoher Temperatur ausgeführtes Verfahren, zumeist auf Basis von Metallpulvern, wobei der Werkstoff aus einzelnen Partikeln lokal miteinander verpresst und verbunden wird, ohne jedoch das Ausgangsmaterial vollständig aufzuschmelzen.

Insbesondere kann dabei der gemeinsame Werkstoff einen weiteren Werkstoff aufweisen, wobei insbesondere zusätzlich mittels eines jeweiligen Anteiles des weiteren Werkstoffs im Tragkörper, im jeweiligen Tragkörperteil und/oder im Laufkörper die unterschiedliche Werkstoffdichte zusätzlich verändert ist.

Dabei kann beispielsweise ein "weiterer Werkstoff", wie ein Füllstoff, ein Abrasivstoff und/oder ein anderer Stoff zum lokalen Beeinflussen der Werkstoffeigenschaften, verwendet werden. So kann beispielsweise im Laufkörper ein keramisches Pulver eingearbeitet werden, um hohe Dichte des Laufkörpers mit entsprechender Verschleißfestigkeit zu verbinden. Ebenso ist das Einbringen von Gleitpartikeln wie beispielsweise Graphitpartikeln oder TPFE-Partikeln, letztgenannter Werkstoff TPFE auch als Teflon bekannt, zum Verringern der Gleitreibung, möglich.

In einer Ausführungsform weist der gemeinsame Werkstoff einen Kunststoff, insbesondere ein Elastomer, ein thermoplastisches Elastomer, ein Duroplast und/oder einen Thermoplast und/oder ein Metall, insbesondere einen Stahl, ein Aluminium und/oder ein Titan, auf.

In einem weiteren Aspekt wird die Aufgabe gelöst durch ein Verfahren zum Herstellen eines Stators für eine Pumpe, gemäß einer der vorig bezeichneten Ausführungsformen, mit folgenden Schritten:
- Einbringen eines Werkstoffgrundmaterials in einen Herstellungsraum, sodass das Werkstoffgrundmaterial im Herstellungsraum vorliegt,
- Behandeln des Werkstoffgrundmaterials im Herstellungsraum, wobei mittels des Behandelns das Werkstoffgrundmaterial zum einem gemeinsamen Werkstoff umgewandelt wird und wobei das Behandeln für einen ersten Herstellungsbereich zum Herstellen des Tragkörpers und das Behandeln für einen zweiten Herstellungsraum zum Herstellen des Laufkörpers derart unterschiedlich erfolgt, dass eine Werkstoffdichte des Werkstoffes des Tragkörpers und eine Werkstoffdichte des Werkstoffes des Laufkörpers voneinander unterschiedlich eingestellt sind,
sodass der Stator derart hergestellt ist, dass mittels der unterschiedlich eingestellten Werkstoffdichten eine unterschiedliche Elastizität und/oder eine unterschiedliche Härte des Werkstoffes im Tragkörper und im Laufkörper erreicht ist.

Ein "Einbringen" eines Werkstoffgrundmaterials in einen Herstellungsraum bezeichnet in diesem Zusammenhang das Bereitstellen eines "Werkstoffgrundmaterials", also beispielsweise eines Ausgangsfilamentes für einen 3D-Druck und/oder eines Sinterpulvers für einen Sinterprozess, in einem Herstellungsraum, wobei der Herstellungsraum hierbei beispielsweise einen 3D-Drucker, eine Sinterform oder eine vergleichbare Anordnung bezeichnet.

Das "Behandeln" bezeichnet in diesem Zusammenhang das Einwirken auf das Werkstoffgrundmaterial, beispielsweise im Falle eines 3D-Druckes mittels eines Erhitzens und Aufbringens eines Filamentes oder beispielsweise mittels eines Einstrahlens eines Lasers auf ein Pulver oder ein Granulat, sodass das Werkstoffgrundmaterial zum gemeinsamen Werkstoff umgewandelt, beispielsweise verschmolzen, wird. Analog dazu erfolgt ein Behandeln bei einem Sinter-Prozess mittels eines Aufbringens von Druck und/oder Hitze.

Im Ergebnis wird dann ein Stator wie oben beschrieben erzeugt, wobei insbesondere Tragkörper und Laufkörper unterschiedliche Werkstoffdichten aufweisen.

Insbesondere erfolgt das Behandeln dabei mittels eines werkstoffbildenden Urformverfahrens, insbesondere mittels eines additiven Verfahrens und/oder mittels eines Sinterverfahrens. Dabei werden insbesondere in einem gemeinsamen Fertigungsprozess, also mit Herstellung des gesamten Grundkörpers, jeweilige Fertigungsparameter derart angepasst, dass unterschiedliche Werkstoffdichten erzeugt sind. Beispielsweise können lokal Drücke, Einwirkungen von Laser, Temperatur oder geometrische Anordnung entsprechender Werkstoffbereiche angepasst werden.

In einem weiteren Aspekt wird die Aufgabe gelöst durch einen Stator für eine Pumpe, welcher mittels eines solchen Verfahrens hergestellt ist.

Es sei in diesem Zusammenhang darauf hingewiesen, dass neben der Herstellung eines Stators analog zur Erfindung auch ein Rotor einer Pumpe äquivalent möglich ist, sofern beispielsweise unterschiedliche Eigenschaften eines Werkstoffes an einem Pumpenrotor für die spezielle Ausführung der Pumpe analog zu den gezeigten jeweiligen Ausführungsformen eines Stators zweckdienlich sind.

Gemäß eines weiteren Aspektes wird die Aufgabe gelöst durch eine Pumpe, insbesondere eine Drehkolbenpumpe und/oder eine Exzenterschneckenpumpe mit einem Stator gemäß einer der vorig bezeichneten Ausführungsformen und/oder wobei der Stator mittels eines Verfahrens wie oben beschrieben hergestellt ist.

Im Weiteren wird die Erfindung anhand von Ausführungsbeispielen näher erläutert. Es zeigen:
- Figur 1: eine schematische Schnittdarstellung einer Drehkolbenpumpe in einer Seitenansicht,
- Figur 2: eine schematische Schnittdarstellung einer Exzenterschneckenpumpe in einer Seitendarstellung,
- Figur 3: eine schematische Schnittdarstellung eines Stators der Drehkolbenpumpe der Figur 1, sowie
- Figur 4: eine schematische Schnittdarstellung eines Stators der Exzenterschneckenpumpe der Figur 2.

Eine Drehkolbenpumpe 101 weist ein Gehäuse 102 mit zwei Gehäuseteilen 103 und 104 auf. Abgegrenzt durch einen Stator 105 im gehäuseteil 103 und einen Stator 106 im Gehäuseteil 104 ist ein Innenraum 111 gebildet, in dem ein Drehkolben 121 sowie ein Drehkolben 123 entlang einer jeweiligen Drehrichtung 171 und 173 drehbar angeordnet sind. Die Drehkolben 121 sowie 123 sind gegenläufig angeordnet und dienen innerhalb des ovalen Gehäuses 102 zum Pumpen von Flüssigkeiten entlang einer Förderrichtung 181. Entsprechende Flüssigkeit wird in einem Zulauf 161 zugeführt, mittels der Drehkolben 121 und 123 im Innenraum 111 gepumpt und durch einen Ablauf 163 abgeführt.

Beispielhaft am Stator 105 sei dessen innerer Aufbaudargelegt, welcher identisch zum Aufbau des Stators 106 ist.

Es sei hierzu erwähnt, dass gegenüber dem jeweiligen Drehkolben 121 und 123 ein gutes Verschleißverhalten durch eine harte Oberfläche angestrebt wird, wohingegen der Grundaufbau des jeweiligen Stators derart elastisch ausgeführt sein sollte, dass ein Anschmiegen des jeweiligen Drehkolbens ermöglicht ist, sodass die Drehkolbenpumpe eine gute Dichtheit und damit einen hohen Wirkungsgrad aufweist.

Der Stator 105 weist eine dem Gehäuseteil 103 zugewandte Tragschicht 321 auf, in Richtung des Drehkolbens 121 folgt sodann eine Stützstruktur 323 sowie eine dem Drehkolben 121 zugewandte Laufschicht 325. Der Stator ist mittels eines 3D-Druckverfahrens hergestellt, wobei mittels dieses Verfahrens die Tragschicht 321 mit einer mittleren Dichte und mittleren Elastizität hergestellt wurde. Die Stützstruktur 323 weist bewusst eingebrachte Freiräume 324 auf, womit eine fachwerkartige Struktur hoher Elastizität und erhöhter Resilienz gegen Verformung erzeugt ist. Die Laufschicht 325 hingegen ist mit einer hohen Dichte und mit einem Zuschlagsstoff zur Erhöhung der Verschleißfähigkeit erstellt, sodass eine dem Drehkolben 121 zugewandte Laufseite 363 verschleißfest ausgelegt ist und eine dem Gehäuseteil 103 zugewandte Gehäuseseite 361 entsprechend elastisch und verformbar. Es sei darauf hingewiesen, dass der Aufbau des Stators analog zum Aufbau des Drehkolbens erfolgen kann, wobei für diesen Fall der Drehkolben analog zum oben beschriebenen Stator erfolgt. So kann auch die Oberfläche des Drehkolbens analog zum Aufbau des Stators 105, also als im 3D-Druck erstellte, elastische Struktur, aufgebaut sein, wobei dann der Stator beispielsweise aus Edelstahl gefertigt ist. Damit kann beispielsweise auch eine axiale Abdichtung verbessert werden, in dem der Drehkolben auch axial eine entsprechende elastische Oberfläche aufweist.

Eine Exzenterschneckenpumpe 201 weist ein erstes Gehäuseteil 203 sowie ein Pumpengehäuse 204 auf. Außerhalb des Gehäuseteils 203 ist ein Motor 231 angeordnet, welcher über ein Getriebe 233 eine Welle 235 antreibt. Die Welle 235 wiederum ist formschlüssig mit einer Exzenterschnecke 237 verbunden. Hierbei kann alternativ auch eine Verbindung mittels eines Gelenkes erfolgen. Die Exzenterschnecke 237 ist im Pumpengehäuse 204 angeordnet und drehbeweglich um eine Drehrichtung 271 in einem elastischen Stator 205 angeordnet. Dabei ist sowohl die Exzenterschnecke 237 als auch der Stator 205 umlaufend mäandernd ausgebildet, sodass bei einer Drehung der Exzenterschnecke 237 ein Pumpen von Flüssigkeit aus einem Innenraum 211 im Gehäuseteil 203 durch einen Pumpenraum 213 im Pumpengehäuse 204 entlang einer Förderrichtung 281 erfolgt. Somit kann eine Flüssigkeit durch einen Zulauf 261 am Gehäuseteil 203 angesaugt und entlang des Pumpenraums 213 zu einem Ablauf 263 gepumpt werden.

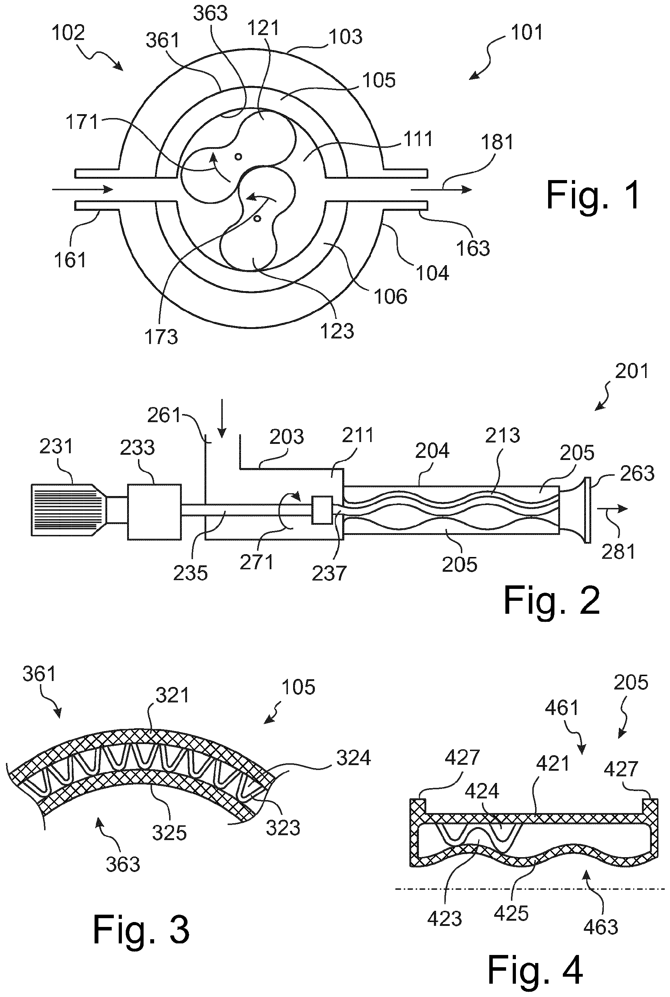

Der Stator 205 (Details siehe Figur 4) ist dabei über sein Volumen mit unterschiedlicher Dichte sowie unterschiedlicher Struktur ausgeführt, jedoch aus einem gemeinsamen Werkstoff gebildet. Der Stator 205 ist dabei aus einem Elastomer hergestellt.

Der Stator 205 weist an einer Gehäuseseite 461 Vorsprünge 427 zum formschlüssigen Einfügen im Pumpengehäuse 204 auf, gehäuseseitig ist dabei eine Tragschicht 221 mit mittlerer Dichte erzeugt. In Richtung der Exzenterschnecke 237 ist sodann eine Stützstruktur 423 analog der Stützstruktur 323 angeordnet, wobei auch hier Freiräume 424 vorgesehen sind. Damit ist die Stützstruktur 423 ebenfalls fachwerkartig ausgebildet. Eine der Exzenterschnecke 237 zugewandte Schicht 425 an einer Laufseite 463 ist mit einer hohen Dichte und damit hoher Verschleißfestigkeit ausgeführt.

Der Stator 205 ist dabei in einem 3D-Druckverfahren hergestellt, wobei mittels Einstellung der entsprechenden Druckparameter unterschiedliche Dichten der jeweiligen Schichten und Strukturen erzeugt ist. Im Bereich der Stützstruktur 423 ist dabei durch Materialauslassung die fachwerkartige Struktur erzeugt. Es sei hierzu erwähnt, dass der Stator 205 in seinem Inneren auch durch die Stützstruktur 423 voneinander abgegrenzte Kammern (nicht dargestellt) aufweisen kann, wobei beispielsweise eine Anzahl von Kammern entlang der Förderrichtung 281 der Exzenterschneckenpumpe 201 angeordnet sind und mittels eines Druckluftanschlusses (nicht gezeigt) differenziert voneinander mit Druckluft beaufschlagbar sind und damit eine Härte der Kammern einstellbar ist. Somit kann beispielsweise das elastische Verhalten des Stators 205 in weiten Grenzen frei eingestellt werden. Beispielsweise kann damit auch eine stufenweise ansteigende Härte des Stators 205 eingestellt werden, sodass einem ansteigenden Druck in der Exzenterschneckenpumpe 201 entlang der Förderrichtung 281 begegnet wird.

### Bezugszeichenliste

101 Drehkolbenpumpe
102 Gehäuse
103 Gehäuseteil
104 Gehäuseteil
105 Stator
106 Stator
111 Innenraum
121 Drehkolben
123 Drehkolben
161 Zulauf
163 Ablauf
171 Drehrichtung
173 Drehrichtung
181 Förderrichtung
201 Exzenterschneckenpumpe
203 Gehäuseteil
204 Pumpengehäuse
205 Stator
211 Innenraum
213 Pumpenraum
231 Motor
233 Getriebe
235 Welle
237 Exzenterschnecke
261 Zulauf
263 Ablauf
271 Drehrichtung
281 Förderrichtung
321 Tragschicht
323 Stützstruktur
324 Freiraum
325 Laufschicht
361 Gehäuseseite
363 Laufseite
421 Tragschicht
423 Stützstruktur
424 Freiraum
425 Laufschicht
427 Vorsprung
461 Gehäuseseite
463 Laufseite

## Patentansprüche

1. Stator (105, 106, 205) für eine Pumpe (101, 201), insbesondere für eine Drehkolbenpumpe (101) oder eine Exzenterschneckenpumpe (201), mit einem Grundkörper (321, 323, 325, 421, 423, 425, 427), wobei der Grundkörper (321, 323, 325, 421, 423, 425, 427) einen Pumpenraum (111, 213) für eine Rotoranordnung (121, 123, 273) der Pumpe (101, 201) umgibt, einen Tragkörper (321, 323, 421, 423) und einen Laufkörper (325, 425) aufweist und der Laufkörper (325, 425) eine Lauffläche zum zumindest teilweisen Kontaktieren mit der Rotoranordnung der Pumpe (101, 201) ausbildet, **dadurch gekennzeichnet, dass** der Tragkörper (321, 323, 421, 423) und der Laufkörper (325, 425) einen gemeinsamen Werkstoff aufweisen und eine Werkstoffdichte des Werkstoffes des Tragkörpers (321, 323, 421, 423) und eine Werkstoffdichte des Werkstoffes des Laufkörpers (325, 425) voneinander unterschiedlich eingestellt sind, sodass mittels der unterschiedlich eingestellten Werkstoffdichten eine unterschiedliche Elastizität und/oder eine unterschiedliche Härte des Werkstoffes im Tragkörper (321, 323, 421, 423) und im Laufkörper (325, 425) erreicht ist.

2. Stator gemäß Anspruch 1, **dadurch gekennzeichnet, dass** die Werkstoffdichte des Laufkörpers (325, 425) höher ist als die Werkstoffdichte des Tragkörpers (321, 323, 421, 423), sodass der Laufkörper (325, 425) insbesondere eine geringere Elastizität und/oder eine höhere Härte aufweist, als der Tragkörper (321, 323, 421, 423).

3. Stator gemäß Anspruch 1 oder 2, **dadurch gekennzeichnet, dass** der Tragkörper (321, 323, 421, 423) einen ersten Tragkörperteil (321, 421), einen zweiten Tragkörperteil (323, 423), einen dritten Tragkörperteil (427) und/oder einen weiteren Tragkörperteil aufweisen, wobei die Werkstoffdichten des Werkstoffes des jeweiligen Tragkörperteils (321, 323, 421, 423, 427) voneinander unterschiedlich eingestellt sind, sodass mittels der unterschiedlich eingestellten Werkstoffdichten eine unterschiedliche Elastizität und/oder eine unterschiedliche Härte des Werkstoffes im jeweiligen Tragkörperteil (321, 323, 421, 423, 427) gegenüber dem jeweiligen anderen Tragkörperteil (321, 323, 421, 423, 427) erreicht ist, wobei insbesondere die jeweiligen Tragkörperteile (321, 323, 421, 423, 427) in im Wesentlichen radial um den Pumpenraum (111, 213) angeordnete Schichten angeordnet sind.

4. Stator gemäß einem der vorherigen Ansprüche, **dadurch gekennzeichnet, dass** der Tragkörper (321, 323, 421, 423) und/oder insbesondere der jeweilige Tragkörperteil (321, 323, 421, 423, 427) eine innere Struktur (323, 324, 423, 424) aufweist oder aufweisen, wobei die innere Struktur (323, 324, 423, 424) Poren, Hohlräume (324, 424) und/oder Kammern sowie Stege, Lamellen (323, 423) und/oder Werkstoffbrücken aufweist, wobei insbesondere mittels der durch eine Verteilung der Poren, Hohlräume (324, 424) und/oder Kammern sowie Stege, Lamellen (323, 423) und/oder Werkstoffbrücken eingestellten makroskopischen Werkstoffdichten eine unterschiedliche Elastizität und/oder eine unterschiedliche Härte des Werkstoffes im Tragkörper (321, 323, 421, 423) und im Laufkörper erreicht ist.

5. Stator gemäß Anspruch 4, **dadurch gekennzeichnet, dass** die innere Struktur (323, 324, 423, 424) mittels einer Druckfluidzuführung oder mehrerer Druckfluidzuführungen fluidleitend zugänglich ausgebildet ist, wobei mittels eines Einleitens eines Druckfluides durch die Druckfluidzuführung oder durch die Druckfluidzuführungen in die Poren, Hohlräume (324, 424) und/oder Kammern der inneren Struktur (323, 324, 423, 424) eine druckinduzierte Kraft auf den Laufkörper erhöht und/oder mittels eines Ableitens eines Druckfluides durch die Druckfluidzuführung oder durch die Druckfluidzuführungen aus den Poren, Hohlräumen (324, 424) und/oder Kammern der inneren Struktur (323, 324, 423, 424) abgesenkt ist.

6. Stator gemäß Anspruch 5, **dadurch gekennzeichnet, dass** der Druckfluidzuführung oder den Druckfluidzuführungen eine Steuereinrichtung zum Steuern des Einleitens und/oder Ableitens des Druckfluides durch die Druckfluidzuführung zugeordnet ist.

7. Stator gemäß einem der vorherigen Ansprüche, **dadurch gekennzeichnet, dass** der Tragkörper (321, 323, 421, 423) und/oder insbesondere der jeweilige Tragkörperteil (321, 323, 421, 423, 427) und/oder der Laufkörper (325, 425) mittels eines werkstoffbildenden Urformverfahrens, insbesondere mittels eines additiven Verfahrens und/oder mittels eines Sinterverfahrens, hergestellt ist.

8. Stator gemäß einem der vorherigen Ansprüche, **dadurch gekennzeichnet, dass** der gemeinsame Werkstoff einen weiteren Werkstoff aufweist, wobei insbesondere zusätzlich mittels eines jeweiligen Anteils des weiteren Werkstoffes im Tragkörper (321, 323, 421, 423), im jeweiligen Tragkörperteil (321, 323, 421, 423, 427) und/oder im Laufkörper (325, 425) die unterschiedliche Werkstoffdichte zusätzlich verändert ist.

9. Stator gemäß einem der vorherigen Ansprüche, **dadurch gekennzeichnet, dass** der gemeinsame Werkstoff einen Kunststoff, insbesondere ein Elastomer, ein Duroplast und/oder ein Thermoplast und/oder ein Metall, insbesondere einen Stahl, ein Aluminium und/oder ein Titan aufweist.

10. Verfahren zum Herstellen eines Stators (105, 106, 205) für eine Pumpe (101, 201), gemäß einem der vorherigen Ansprüche, mit folgenden Schritten:
- Einbringen eines Werkstoffgrundmaterials in einen Herstellungsraum, sodass das Werkstoffgrundmaterial im Herstellungsraum vorliegt,
- Behandeln des Werkstoffgrundmaterials im Herstellungsraum, wobei mittels des Behandelns das Werkstoffgrundmaterial zum einem gemeinsamen Werkstoff umgewandelt wird und wobei das Behandeln für einen ersten Herstellungsbereich zum Herstellen des Tragkörpers (321, 323, 421, 423) und das Behandeln für einen zweiten Herstellungsraum zum Herstellen des Laufkörpers (325, 425) derart unterschiedlich erfolgt, dass eine Werkstoffdichte des Werkstoffes des Tragkörpers (321, 323, 421, 423) und eine Werkstoffdichte des Werkstoffes des Laufkörpers (325, 425) voneinander unterschiedlich eingestellt sind,
sodass der Stator (105, 106, 205) derart hergestellt ist, dass mittels der unterschiedlich eingestellten Werkstoffdichten eine unterschiedliche Elastizität und/oder eine unterschiedliche Härte des Werkstoffes im Tragkörper (321, 323, 421, 423) und im Laufkörper (325, 425) erreicht ist.

11. Verfahren gemäß Anspruch 10, **dadurch gekennzeichnet, dass** das Behandeln ein werkstoffbildendes Urformverfahren, insbesondere ein additives Verfahren und/oder ein Sinterverfahren aufweist, wobei das Behandeln insbesondere in einem gemeinsamen Fertigungsprozess mittels eines Anpassens von jeweiligen Fertigungsparametern erfolgt.

12. Stator (105, 106, 205) für eine Pumpe (101, 201), insbesondere gemäß einem der Ansprüche 1 bis 9, welcher mittels eines Verfahrens gemäß Anspruch 10 oder 11 hergestellt ist.

## Claims

1. A stator (105, 106, 205) for a pump (101, 201), in particular for a rotary piston pump (101) or an eccentric screw pump (201), with a base body (321, 323, 325, 421, 423, 425, 427), wherein the base body (321, 323, 325, 421, 423, 425, 427) surrounds a pump chamber (111, 213) for a rotor arrangement (121, 123, 273) of the pump (101, 201), has a support body (321, 323, 421, 423) and a running body (325, 425), and the running body (325, 425) forms a running surface for at least partial contact with the rotor arrangement of the pump (101, 201), **characterized in that** the support body (321, 323, 421, 423) and the running body (325, 425) have a common material and a material density of the material of the support body (321, 323, 421, 423) and a material density of the material of the running body (325, 425) are set differently from one another, so that a different elasticity and/or a different hardness of the material in the support body (321, 323, 421, 423) and in the running body (325, 425) is achieved by means of the differently set material densities.

2. The stator according to claim 1, **characterized in that** the material density of the running body (325, 425) is higher than the material density of the support body (321, 323, 421, 423), so that the running body (325, 425) has in particular a lower elasticity and/or a higher hardness than the support body (321, 323, 421, 423) .

3. The stator according to claim 1 or 2, **characterized in that** the support body (321, 323, 421, 423) has a first support body part (321, 421), a second support body part (323, 423), a third support body part (427) and/or a further support body part, wherein the material densities of the material of the respective support body part (321, 323, 421, 423, 427) are set differently from one another, so that a different elasticity and/or a different hardness of the material is reached in the respective support body part (321, 323, 421, 423, 427) with respect to the respective other support body part (321, 323, 421, 423, 427) by means of the differently set material densities, wherein in particular the respective support body parts (321, 323, 421, 423, 427) are arranged in layers, which are arranged essentially radially around the pump chamber (111, 213).

4. The stator according to one of the preceding claims, **characterized in that** the support body (321, 323, 421, 423) and/or in particular the respective support body part (321, 323, 421, 423, 427) has or have an inner structure (323, 324, 423, 424), wherein the inner structure (323, 324, 423, 424) has pores, hollow spaces (324, 424) and/or chambers, as well as webs, lamellae (323, 423) and/or material bridges, wherein a different elasticity and/or a different hardness of the material is reached in the support body (321, 323, 421, 423) and in the running body, in particular by means of the macroscopic material densities set by means of a distribution of the pores, hollow spaces (324, 424) and/or chambers as well as webs, lamellae (323, 423) and/or material bridges.

5. The stator according to claim 4, **characterized in that** the inner structure (323, 324, 423, 424) is formed to be accessible in a fluid-conducting manner by means of a pressurized fluid supply or several pressurized fluid supplies, wherein a pressure-induced force on the running body is increased by means of an introduction of a pressurized fluid through the pressurized fluid supply or through the pressurized fluid supplies into the pores, hollow spaces (324, 424) and/or chambers of the inner structure (323, 324, 423, 424), and/or is lowered by means of a removal of a pressurized fluid through the pressurized fluid supply or through the pressurized fluid supplies out of the pores, hollow spaces (324, 424) and/or chambers of the inner structure (323, 324, 423, 424).

6. The stator according to claim 5, **characterized in that** a control device for controlling the introduction and/or removal of the pressurized fluid through the pressurized fluid supply is assigned to the pressurized fluid supply or the pressurized fluid supplies.

7. The stator according to one of the preceding claims, **characterized in that** the support body (321, 323, 421, 423) and/or in particular the respective support body part (321, 323, 421, 423, 427) and/or the running body (325, 425) is produced by means of a material-forming primary shaping method, in particular by means of an additive method and/or by means of a sintering method.

8. The stator according to one of the preceding claims, **characterized in that** the common material has a further material, wherein the different material density is additionally modified, in particular additionally by means of a respective portion of the further material in the support body (321, 323, 421, 423), in the respective support body part (321, 323, 421, 423, 427) and/or in the running body (325, 425).

9. The stator according to one of the preceding claims, **characterized in that** the common material has a plastic, in particular an elastomer, a thermoplastic elastomer, a thermosetting plastic and/or a thermoplastic and/or a metal, in particular a steel, an aluminum and/or a titanium.

10. A method for producing a stator (105, 106, 205) for a pump (101, 201), according to one of the preceding claims, with the following steps:
- introducing a material base material into a production chamber, so that the material base material is present in the production chamber,
- treating the material base material in the production chamber, wherein the material base material is converted into a common material by means of the treatment and wherein the treatment for a first production region for producing the support body (321, 323, 421, 423) takes place differently from the treatment for a second production chamber for producing the running body (325, 425) in such a way that a material density of the material of the support body (321, 323, 421, 423) and a material density of the material of the running body (325, 425) are set differently from one another,
so that the stator (105, 106, 205) is produced in such a way that a different elasticity and/or a different hardness of the material in the support body (321, 323, 421, 423) and in the running body (325, 425) is achieved by means of the differently set material densities.

11. The method according to claim 10, **characterized in that** the treatment has a material-forming primary shaping method, in particular an additive method and/or a sintering method, wherein the treatment in particular takes place in a common manufacturing process by means of an adaptation of respective manufacturing parameters.

12. A stator (105, 106, 205) for a pump (101, 201), in particular according to one of claims 1 to 9, which is produced by means of a method according to claim 10 or 11.

## Revendications

1. Stator (105, 106, 205) pour une pompe (101, 201), en particulier pour une pompe à piston rotatif (101) ou une pompe à vis excentrée (201), ayant un corps de base (321, 323, 325, 421, 423, 425, 427), dans lequel le corps de base (321, 323, 325, 421, 423, 425, 427) entoure une chambre de pompe (111, 213) pour un ensemble de rotor (121, 123, 273) de la pompe (101, 201), un corps de support (321, 323, 421, 423), et un corps mobile (325, 425), et le corps mobile (325, 425) forme une surface de mouvement pour venir au moins partiellement en contact avec l'ensemble de rotor de la pompe (101, 201),
**caractérisé en ce que** le corps de support (321, 323, 421, 423) et le corps mobile (325, 425) comportent un matériau commun et une densité de matériau du matériau du corps de support (321, 323, 421, 423) et une densité de matériau du matériau du corps mobile (325, 425) sont réglées différemment l'une de l'autre, de telle sorte qu'une élasticité différente et/ou une dureté différente du matériau est obtenue dans le corps de support (321, 323, 421, 423) et dans le corps mobile (325, 425), au moyen des densités de matériau réglées différemment.

2. Stator selon la revendication 1, **caractérisé en ce que** la densité de matériau du corps mobile (325, 425) est supérieure à la densité de matériau du corps de support (321, 323, 421, 423), de telle sorte que le corps mobile (325, 425) présente en particulier une élasticité plus faible et/ou une dureté plus élevée que le corps de support (321, 323, 421, 423).

3. Stator selon la revendication 1 ou 2, **caractérisé en ce que** le corps de support (321, 323, 421, 423) comporte une première partie de corps de support (321, 421), une deuxième partie de corps de support (323, 423), une troisième partie de corps de support (427), et/ou une partie de corps de support supplémentaire, dans lequel les densités de matériau du matériau de la partie de corps de support (321, 323, 421, 423, 427) respective sont réglées différemment l'une de l'autre, de telle sorte qu'une élasticité différente et/ou une dureté différente du matériau est obtenue dans la partie de corps de support (321, 323, 421, 423, 427) respective par rapport à l'autre partie de corps de support (321, 323, 421, 423, 427) respective, au moyen des densités de matériau réglées différemment, dans lequel les parties de corps de support (321, 323, 421, 423, 427) respectives sont en particulier disposées en couches disposées de manière sensiblement radiale autour de la chambre de pompe (111, 213).

4. Stator selon l'une des revendications précédentes, **caractérisé en ce que** le corps de support (321, 323, 421, 423) et/ou en particulier la partie de corps de support (321, 323, 421, 423, 427) respective comporte ou comportent une structure interne (323, 324, 423, 424), dans lequel la structure interne (323, 324, 423, 424) comporte des pores, des cavités (324, 424), et/ou des chambres ainsi que des évidements, des lamelles (323, 423) et/ou des ponts de matériaux, dans lequel une élasticité différente et/ou une dureté différente du matériau est obtenue dans le corps de support (321, 323, 421, 423) et dans le corps mobile, en particulier au moyen des densités de matériau macroscopiques réglées par une répartition des pores, des cavités (324, 424) et/ou des chambres ainsi que des évidements, des lamelles (323, 423) et/ou des ponts de matériaux.

5. Stator selon la revendication 4, **caractérisé en ce que** la structure interne (323, 324, 423, 424) est réalisée de manière à être accessible de manière à conduire le fluide, au moyen d'une ligne d'alimentation en fluide sous pression ou de plusieurs lignes d'alimentation en fluide sous pression, dans lequel une introduction d'un fluide sous pression via la ligne d'alimentation en fluide sous pression ou via les lignes d'alimentation en fluide sous pression dans les pores, les cavités (324, 424), et/ou les chambres de la structure interne (323, 324, 423, 424) augmente une force induite par la pression sur le corps mobile et/ou est réduite au moyen d'une évacuation d'un fluide sous pression via la ligne d'alimentation en fluide sous pression ou via les lignes d'alimentation en fluide sous pression à partir des pores, des cavités (324, 424), et/ou des chambres de la structure interne (323, 324, 423, 424).

6. Stator selon la revendication 5, **caractérisé en ce que** la ligne d'alimentation en fluide sous pression ou les lignes d'alimentation en fluide sous pression sont associées à un dispositif de commande pour commander l'introduction et/ou l'évacuation du fluide sous pression via la ligne d'alimentation en fluide sous pression.

7. Stator selon l'une des revendications précédentes, **caractérisé en ce que** le corps de support (321, 323, 421, 423) et/ou en particulier la partie de corps de support (321, 323, 421, 423, 427) respective et/ou le corps mobile (325, 425) est fabriqué au moyen d'un procédé de fabrication de transformation primaire par mise en forme de matériau, en particulier au moyen d'un procédé additif et/ou au moyen d'un procédé de frittage.

8. Stator selon l'une des revendications précédentes, **caractérisé en ce que** le matériau commun comporte un matériau supplémentaire, dans lequel, en particulier, la densité de matériau différente est de plus changée au moyen d'une proportion respective du matériau supplémentaire dans le corps de support (321, 323, 421, 423), dans la partie de corps de support (321, 323, 421, 423, 427) respective, et/ou dans le corps mobile (325, 425).

9. Stator selon l'une des revendications précédentes, **caractérisé en ce que** le matériau commun comporte une matière plastique, en particulier un élastomère, une matière duroplastique, et/ou une matière thermoplastique et/ou un métal, en particulier un acier, un aluminium, et/ou un titane.

10. Procédé de production d'un stator (105, 106, 205) pour une pompe (101, 201) selon l'une des revendications précédentes, comportant les étapes suivantes consistant à :
- introduire une matière de base de matériau dans un espace de production de telle sorte que la matière de base de matériau est présente dans l'espace de production,
- traiter la matière de base de matériau dans l'espace de production, dans lequel la matière de base de matériau est transformée en un matériau commun au moyen du traitement et dans lequel le traitement est réalisé différemment pour une première zone de production destinée à produire le corps de support (321, 323, 421, 423) et le traitement est réalisé différemment pour un second espace de production destiné à produire le corps mobile (325, 425), de telle sorte qu'une densité de matériau du matériau du corps de support (321, 323, 421, 423) et une densité de matériau du matériau du corps mobile (325, 425) sont réglées différemment l'une de l'autre,
de telle sorte que le stator (105, 106, 205) est produit afin d'obtenir une élasticité différente et/ou une dureté différente du matériau dans le corps de support (321, 323, 421, 423) et dans le corps mobile (325, 425), au moyen des densités de matériau réglées différemment.

11. Procédé selon la revendication 10, **caractérisé en ce que** le traitement comporte un procédé de fabrication de transformation primaire par mise en forme de matériau, en particulier un procédé additif et/ou un procédé de frittage, dans lequel le traitement s'effectue en particulier, dans un processus de fabrication commun, au moyen d'un réglement de paramètres de fabrication respectifs.

12. Stator (105, 106, 205) pour une pompe (101, 201), en particulier selon l'une des revendications 1 à 9, qui est fabriqué au moyen d'un procédé selon la revendication 10 ou 11.
